# EUROPEAN PATENT APPLICATION

(11) **EP 4 663 992 A1**
(43) Date of publication of application: **17.12.2025**
(21) Application number: 24181485.4
(22) Date of filing: 11.06.2024
(51) Int. Cl.: F16L 3/137, B60R 16/02, F16L 55/035, H02G 3/32

(54) **MOUNTING DEVICE FOR ATTACHING A PIPE OR HOSE TO A VEHICLE STRUCTURE, MOUNTING ASSEMBLY, AND VEHICLE**

(71) Applicant: Volvo Car Corporation, 405 31 Göteborg (SE)
(72) Inventor: NAGY, Robert, 40531 Göteborg (SE)
(74) Representative: Maiwald GmbH

(57) **Abstract**

The disclosure relates to a mounting device (18) for attaching a pipe (14) or hose to a vehicle structure (12). The mounting device (18) comprises a first connection interface (24), a second connection interface (26), and a body portion (22). The first connection interface (24) is configured for connecting the mounting device (18) to the vehicle structure (12). The second connection interface (26) is configured for connecting the pipe (14) or hose to the mounting device (18). The body portion (22) extends from the first connection interface (24) to the second connection interface (26). The body portion (22) comprises an elastically deformable bend (30). Additionally, a mounting assembly (16) for attaching a pipe (14) or hose to a vehicle structure (12) is described. The mounting assembly (16) comprises a mounting device (18) and a cable tie (20). The cable tie (20) engages the second connection interface (26) of the mounting device (18). Furthermore, a vehicle is shown that comprises a mounting device (18).

## Description

### TECHNICAL FIELD

The present disclosure relates to a mounting device for attaching a pipe or hose to a vehicle structure.

Moreover, the present disclosure is directed to a mounting assembly for attaching a pipe or hose to a vehicle structure.

Additionally, the present disclosure relates to a vehicle.

### BACKGROUND ART

Various pipes and/or hoses are often attached to a vehicle structure, i.e. the vehicle body. In this context, the pipes may be brake pipes. In another example, the pipes and/or hoses may be fuel lines or coolant lines of an air conditioning system. In a further example, the pipes and/or hoses may form part of an engine cooling system or a battery cooling system. For attaching the pipes and/or hoses to the vehicle body, mounting devices are typically used. During the operation of the systems associated with the pipes and/or hoses, a movement of a fluid inside the pipes and/or hoses may cause vibrations of the pipes and/or hoses. Therefore, it is desirable that such mounting devices have dampening or attenuation properties such that vibrations from the pipes and/or hoses may be dampened or attenuated relative to the vehicle body. Otherwise, these vibrations may lead to noise that can be heard in the vehicle cabin. At the same time, mounting devices shall be structurally simple and compact.

### SUMMARY

It is therefore an objective of the present disclosure to alleviate the conflict of objectives as mentioned above, i.e. a mounting device shall be provided which provides dampening or attenuation properties and, at the same time, is structurally simple and compact.

The problem is at least partially solved or alleviated by the subject matter of the independent claims of the present disclosure, wherein further examples are incorporated in the dependent claims.

According to a first aspect, there is provided a mounting device for attaching a pipe or hose to a vehicle structure. The mounting device comprises:
- a first connection interface configured for connecting the mounting device to the vehicle structure,
- a second connection interface configured for connecting the pipe or hose to the mounting device, and
- a body portion extending from the first connection interface to the second connection interface.
The body portion comprises an elastically deformable bend.

In the context of the present disclosure, the vehicle structure may be a portion of a vehicle body or a portion of a body-in-white. The mounting device is configured to be mounted to the vehicle structure via the first connection interface, while also being configured to hold a pipe or hose using the second connection interface at the same time. Thus, using the mounting device, the pipe or hose may be attached to the vehicle structure. The fact that the bend is elastically deformable means that the body portion can be flexed around the elastically deformable bend without breaking. In the absence of external forces or torques, the body portion moves back into its original shape. Elastically deforming at least the bend of the body portion requires energy. This energy may be provided by a vibration of a hose or pipe attached to the mounting device via the second connection interface. In other words, due to the elastically deformable bend, the body portion has dampening or attenuation properties. Thus, vibrations of the pipe or hose resulting from a fluid guided therein may be dampened or attenuated with respect to the vehicle structure. Such vibrations may result from an operation of a pump or a compressor. Additionally or alternatively, such vibrations may be structure-borne vibrations. In other words, the body portion may isolate these vibrations with respect to the vehicle structure. Thus, the body portion provides vibration isolation. Thus, user comfort in the vehicle cabin may be increased. Additionally, the mounting device has a simple and compact structure.

It is noted that the fact that the bend is elastically deformable does not exclude other portions of the body portion to be elastically deformable as well. In an example, the entire body portion is elastically deformable.

In the context of the present disclosure, the pipe may be a brake pipe. In another example, the pipe or hose may be a fuel line or a coolant line of an air conditioning system. In a further example, the pipe or hose may be a pipe or hose of an engine cooling system, wherein the engine is for example a combustion engine. In still a further example, the pipe or hose may be a pipe or hose of a cooling system for an electric machine, wherein the electric machine is for example an electric traction machine of the vehicle. In still another example, the pipe or hose may be a pipe or hose of a cooling system for a battery, e.g. a traction battery of the vehicle. It is noted that some or all of these examples may be combined in one single vehicle.

According to an example, the body portion is U-shaped. The first connection interface is provided on a first leg of the U-shaped body portion and the second connection interface is provided on a second leg of the U-shaped body portion. In this context, U-shaped means that the body portion is shaped like the letter U. Since the letters C and V have a similar shape, the shape of the body portion may as well be described as C-shaped or V-shaped. Thus, the body portion may be subdivided into a base portion comprising the bend and two legs, i.e. a first leg and a second leg, extending therefrom. The first leg and the second leg may be parallel to each other. In any case, the first leg and the second leg enclose an angle of 45° or less. This has the effect that the size of the mounting device can be comparatively compact while still allowing an elastic deformation of the bend.

In an example in which the body portion is U-shaped, the legs of the U-shape may be elastically deformable in addition to the bend being elastically deformable.

According to an example, the mounting device further comprises a limitation mechanism limiting a relative movement between the first connection interface and the second connection interface. Thus, an elastic deformation of the elastically deformable bend is geometrically limited. This protects the elastically deformable bend from overload. Moreover, limiting a relative movement between the first connection interface and the second connection interface limits a relative movement between a vehicle structure to which the mounting device is connected at a hose or pipe connected to the second connection interface. Consequently, a relative movement of the pipe or hose with respect to the vehicle structure is limited. This helps to avoid undesired contacts of the pipe or hose with other components of a vehicle in which the mounting device is used.

In an example, the limitation mechanism is configured to be able to support a load which is higher than a load supportable by a connection between the first connection interface and the vehicle structure. Thus, in case of overload, the mounting device would disconnect from the vehicle structure without breaking.

In another example, the limitation mechanism is configured to be able to support a load which is higher than a load supportable by a connection between the second connection interface and the hose or pipe. Thus, in case of overload, the hose or pipe would disconnect from the mounting device. Damage of the mounting device would be avoided.

In an example, the mounting device may be capable of withstanding a mechanical force of 100 N or more, in particular 120 N or more. The mechanical force may be a pulling force. Thus, in this example, the limitation mechanism is configured to be able to support a pulling force of 100 N or more, in particular 120 N or more. Additionally, the connection between the first connection interface and the vehicle structure is configured to be able to support a pulling force of 100 N or more, in particular 120 N or more. Thus, the mounting device is reliably connectable to the vehicle structure. Moreover, the connection between the second connection interface and the hose or pipe is configured to be able to support a pulling force of 100 N or more, in particular 120 N or more. Consequently, the hose or pipe is reliably connectable to the mounting device. In a case in which the hose or pipe is connected to the mounting device using a cable tie, the cable tie may be configured to support a higher load than the mounting device.

According to an example, the limitation mechanism comprises a protrusion movably received in an opening. One out of the protrusion and the opening is associated with the first connection interface and the respective other one of the protrusion and the opening is associated with the second connection interface. The protrusion being movably received in the opening means that the protrusion may move inside the opening. In other words, the protrusion has a smaller size than the size of the opening, such that the protrusion can move inside the opening without necessarily touching the boundary of the opening. Such a limitation mechanism is structurally simple.

According to an example, the first connection interface comprises a mounting pin configured for being received in an opening of the vehicle structure. The mounting pin may be understood as a pin-shaped element for fastening the mounting device to the vehicle structure. In other words, the mounting pin may be used to mechanically connect the mounting device to the vehicle structure. The mounting pin may comprise a substantially circular cross section. Optionally, the mounting pin comprises one or more circumferential protrusions or ribs. This has the effect that the mechanical connection between the mounting device and the vehicle structure may be secured.

According to an example, the second connection interface comprises a through hole for receiving a cable tie. This has the effect that the pipe or hose may be mechanically connected to the second connection interface via a cable tie. In an example, the through hole may comprise a rectangular cross section so that a cable tie may extend through the through hole. This is comparatively compact.

According to an example, the mounting device is formed as an integral part. Additionally or alternatively, the mounting device is made of a single material. In case the mounting device is formed as an integral part, the mounting device may also be described as a unitary part. This means that the mounting device is formed as a single, coherent piece. In case the mounting device is made from a single material the material may be a polymer. In an example, the material comprises Polyamide 66 or a material alike. Using a single material and/or forming the mounting device as an integral part simplifies the production of the mounting device.

According to an example, the body portion has a rectangular cross section. A body portion having a rectangular cross section may be plate-shaped or flat bar-shaped. A rectangular cross section has the effect that a deformability of the body portion is different in different directions. Thus, the movability of the bend and, consequently, also a relative movability of the first connection interface and the second connection interface may be adapted by adapting the rectangular cross section.

According to an example, the first connection interface is arranged adjacent to the second connection interface. In other words, the first connection interface and the second connection interface are neighboring one another or are arranged in proximity to one another. This has the effect that the size of the mounting device can be small.

According to an example, a first distance is measured between a crest of the bend and the first connection interface and a second distance is measured between the crest of the bend and the second connection interface. The first distance and the second distance differ by 20% or less. This configuration offers a good compromise between a comparatively compact design of the mounting device and a comparatively large relative movability between the first connection interface and the second connection interface. In case the mounting device has a U-shaped body portion, this means that the first connection interface and the second connection interface have a comparable position on the respective leg of the U-shaped body portion.

According to an example, a distance between the first connection interface and the second connection interface is smaller than a distance between any one of the first connection interface and the second connection interface with respect to a crest of the bend. This has the effect that the size of the mounting device can be compact.

According to a second aspect, there is provided a mounting assembly for attaching a pipe or hose to a vehicle structure. The mounting assembly comprises:
- a mounting device according to the first aspect, and
- a cable tie.

The cable tie engages the second connection interface of the mounting device. In this context, the cable tie can be understood as a zip tie or a tie wrap. Using the cable tie, a pipe or hose may be mechanically attached to the mounting device via the second connection interface. In other words, the cable tie engaging the second connection interface enables mechanically connecting a pipe or hose to the mounting device. Further, as has been mentioned before, the first connection interface is configured for connecting the mounting device to the vehicle structure. Thus, using the mounting assembly, a pipe or hose may be reliably attached to the vehicle structure. Moreover, as has been mentioned before, vibrations of the pipe or hose resulting from a fluid guided therein may be dampened or attenuated with respect to the vehicle structure. Such vibrations may result from an operation of a pump or a compressor. Additionally or alternatively, such vibrations may be structure-borne vibrations. Thus, user comfort in the vehicle cabin may be increased. Additionally, the mounting assembly has a simple and compact structure.

According to a third aspect, there is provided a vehicle. The vehicle comprises a mounting device according to the first aspect. As has been mentioned before, using such a mounting device has the effect that vibrations resulting from a fluid guided in a pipe or hose may be dampened or attenuated with respect to the vehicle structure. Such vibrations may result from an operation of a pump or a compressor. Additionally or alternatively, such vibrations may be structure-borne vibrations. Thus, the user comfort in the vehicle cabin is enhanced.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a mounting assembly according to the present disclosure, wherein the mounting assembly comprises a mounting device according to the present disclosure,
- Figure 2: shows the mounting assembly of Figure 1 in more detail, wherein the mounting device is mounted on a vehicle structure and a pipe is mounted on the mounting device using a cable tie,
- Figure 3: shows the mounting device of Figure 2 in a separate perspective view,
- Figure 4: shows the mounting device of Figure 3 from another perspective,
- Figure 5: shows the mounting device of Figures 3 and 4 in a front view,
- Figure 6: shows the mounting device of Figures 3 to 5 in a top view,
- Figure 7: shows the mounting device of Figures 3 to 6 from another perspective view, wherein a pulling force is applied to the mounting device.

### DETAILED DESCRIPTION

The Figures are merely schematic representations and serve only to illustrate examples of the disclosure. Identical or equivalent elements are in principle provided with the same reference signs.

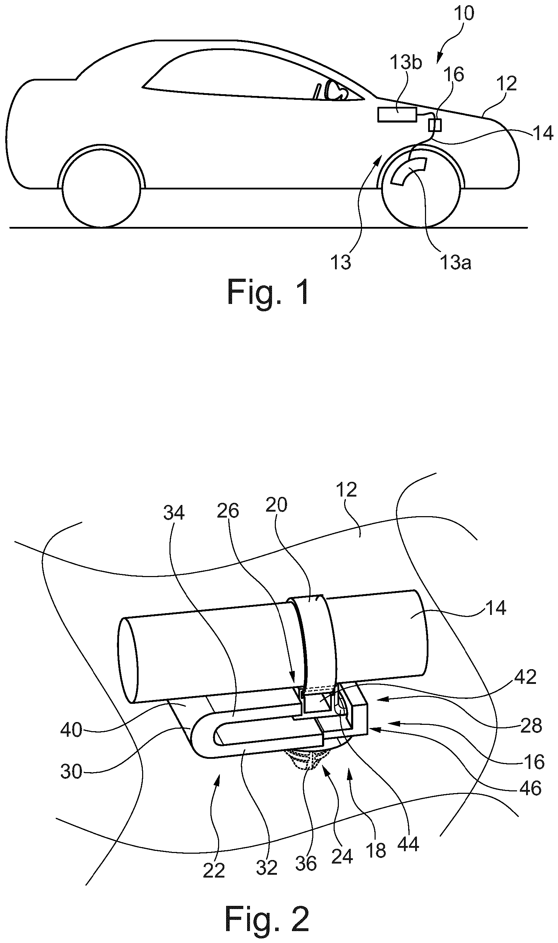

Figure 1 shows a vehicle 10 comprising a vehicle structure 12. In the present example, the vehicle structure 12 is formed by a portion of a vehicle body.

The vehicle 10 further comprises a brake system 13 being represented by a brake caliper 13a associated with a front wheel of the vehicle and a brake cylinder 13b.

The brake caliper 13a and the brake cylinder 13b are fluidically connected by a pipe 14. Thus, in the present example, the pipe 14 is a brake pipe which is filled with brake fluid.

It is noted that both the brake caliper 13a and the brake cylinder 13b are represented in a schematic manner. Moreover, it is understood that the brake system 13 comprises more brake calipers 13a and more pipes 14. However, for the ease of representation, only one brake caliper 13a and one pipe 14 are shown.

The pipe 14 is attached to the vehicle structure 12 using a mounting assembly 16.

The mounting assembly 16 is depicted in a schematic manner in Figure 1. More details of the mounting assembly 16 are shown in Figure 2.

Furthermore, it is understood that the pipe 14 shown in Figure 1 and the other pipes of the brake system 13 may be attached to the vehicle structure 12 using more than one mounting assembly 16. However, these mounting assemblies 16 are all identical such that the following description also applies to the other mounting assemblies.

The mounting assembly 16 comprises a mounting device 18 for attaching the pipe 14 to the vehicle structure 12 and a cable tie 20 (see Figure 2).

The pipe 14 is mechanically connected to the mounting device 18 via the cable tie 20.

The mounting device 18 is mechanically connected to the vehicle structure 12.

The mounting device 18 comprises a U-shaped body portion 22.

This means that the body portion 22 is shaped like the letter U.

Thus, the body portion 22 comprises a first leg 32 and a second leg 34 being connected by a bend 30.

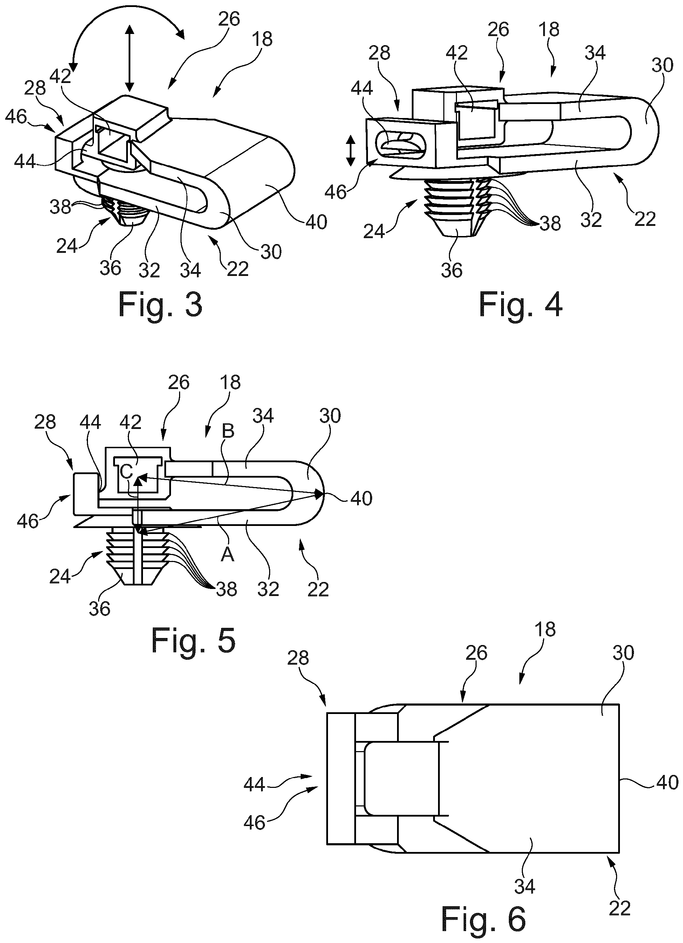

The U-shaped body portion 22 comprises an elastically deformable bend 30 forming a first leg 32 and a second leg 34 (see Figure 3).

In the present example, the first leg 32 and the second leg 34 are parallel to each other. Thus, the bend 30 extends substantially over 180 degrees.

Moreover, the body portion 22 has a rectangular cross section. This means that the body portion 22 has the form of a bent plate or a bent flat bar.

The bend 30 is elastically deformable. Consequently, the second leg 34 is movable towards and away from the first leg 32 and vice versa. Further, the second leg 34 is rotatable with respect to the first leg 32 and vice versa.

A first connection interface 24 is provided on the first leg 32 of the U-shaped body portion 22 (see also Figures 3 to 5).

In the present example, the first connection interface 24 is arranged at a free end of the first leg 32.

The first connection interface 24 is configured for connecting the mounting device 18 to the vehicle structure 12 and comprises a mounting pin 36 configured for being received in an opening of the vehicle structure 12.

In the present example, the mounting pin 36 extends from the first leg 32 in a direction opposite to the location of the second leg 34.

Furthermore, the mounting pin 36 has a substantially circular cross section.

On an outer circumference of the mounting pin 36, five circumferential protrusions 38 are provided. Using these protrusions 38, the mounting pin 36 may be snapped in the opening of the vehicle structure 12.

A second connection interface 26 is configured for connecting the pipe 14 to the mounting device 18.

The second connection interface 26 comprises a through hole 42 for receiving the cable tie 20 (see also Figures 3 to 5). In the present example, the through hole 42 has a substantially rectangular cross section.

The second connection interface 26 is provided on the second leg 34 of the U-shaped body portion 22. In the present example, the second connection interface 26 is provided at a free end of the second leg 34.

Further, in a non-deformed state of the mounting device 18, more precisely in a non-deformed state of the bend 30, the second connection interface 26 is arranged adjacent to the first connection interface 24 (see especially Figure 5). This means that the first connection interface 24 and the second connection interface 26 are neighboring one another.

Moreover, a first distance A measured between a crest 40 of the bend 30 and the first connection interface 24 (see Figure 5) and a second distance measured between the crest 40 of the bend 30 and the second connection interface 26 are substantially equal.

Furthermore, a distance C between the first connection interface 24 and the second connection interface 26 is smaller than both the distance A and the distance B.

The mounting device 18 additionally comprises a limitation mechanism 28.

The limitation mechanism 28 is configured to limit a relative movement between the first connection interface 24 and the second connection interface 26.

The limitation mechanism 28 comprises a protrusion 44 movably received in an opening 46 (see especially Figure 4).

The protrusion 44 being movably received in the opening 46 means that the protrusion 44 can move inside the opening 46.

In the present example, the protrusion 44 is smaller than the opening 46, such that the protrusion 44 can move inside the opening 46.

In the present example, the opening 46 is associated with the first connection interface 24. This means that the opening 46 is provided at a free end of the first leg 32.

The protrusion 44 is associated with the second connection interface 26. This means that the protrusion 44 is provided at a free end of the second leg 34.

It is understood that the limitation mechanism 28 may alternatively be provided in a cinematically inverted manner. This means that the protrusion 44 could be associated with the first connection interface 24 and the opening 46 could be associated with the second connection interface 26.

In the present example, the mounting device 18 is formed as an integral part.

Moreover, the mounting device 18 is made of a single material. In the present example, the mounting device 18 is made of Polyamide 66.

The mounting device 18 may be produced using an injection molding process.

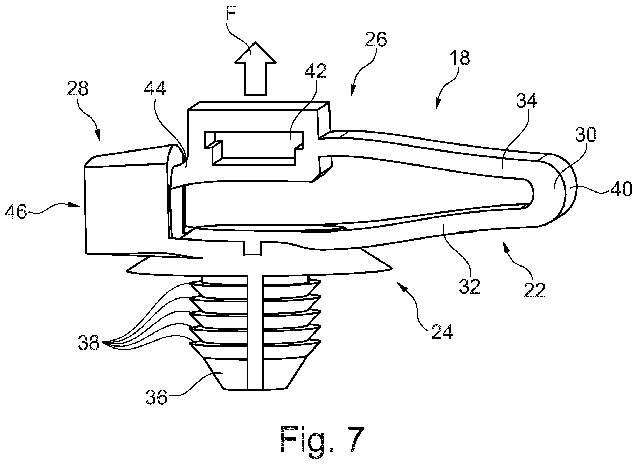

Figure 7 depicts schematically the case, in which a pulling force F is applied to the second connection interface 26, i.e. the mounting device 18 is loaded.

In the present example, the pulling force F is 120 N.

Figure 7 shows that the body portion 22 deforms, when the pulling force F is applied to the second connection interface 26. Further, the limitation mechanism 28 limits a movement of the first leg 32 and the second leg 34 relative to one another. In the present example, the opening 46 of the limitation mechanism 28 also deforms slightly.

It is noted that even though the mounting assembly 16 and the mounting device 18 have been explained in connection with a pipe 14 being a brake, it is also possible to use the mounting assembly 16 and the mounting device 18 for other types of pipes or hoses. In another example, the pipe 14 is a fuel line. In still another example, the pipe 14 or hose is a coolant line of an air conditioning system. In a further example, the pipe 14or hose may be a pipe or hose of an engine cooling system, wherein the engine is for example a combustion engine. In still a further example, the pipe 14 or hose may be a pipe or hose of a cooling system for an electric machine, wherein the electric machine is for example an electric traction machine of the vehicle 10. In still another example, the pipe 14 or hose may be a pipe or hose of a cooling system for a battery, e.g. a traction battery of the vehicle 10. The mounting assembly 16 and the mounting device 18 as explained above is also suitable for these alternative applications. Thus, the above explanations apply mutatis mutandis also for these other fields of application. It is noted that some or all of these examples may be combined in one single vehicle 10.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: vehicle structure
- 13: brake system
- 13a: brake caliper
- 13b: brake cylinder
- 14: pipe
- 16: mounting assembly
- 18: mounting device
- 20: cable tie
- 22: body portion
- 24: first connection interface
- 26: second connection interface
- 28: limitation mechanism
- 30: elastically deformable bend
- 32: first leg
- 34: second leg
- 36: mounting pin
- 38: circumferential protrusion
- 40: crest
- 42: through hole
- 44: protrusion
- 46: opening

- A: first distance
- B: second distance
- C: distance
- F: pulling force

## Claims

1. A mounting device (18) for attaching a pipe (14) or hose to a vehicle structure (12), the mounting device (18) comprising
- a first connection interface (24) configured for connecting the mounting device (18) to the vehicle structure (12),
- a second connection interface (26) configured for connecting the pipe (14) or hose to the mounting device (18), and
- a body portion (22) extending from the first connection interface (24) to the second connection interface (26),
wherein the body portion (22) comprises an elastically deformable bend (30).

2. The mounting device (18) of claim 1, wherein the body portion (22) is U-shaped and wherein the first connection interface (24) is provided on a first leg (32) of the U-shaped body portion (22) and the second connection interface (26) is provided on a second leg (34) of the U-shaped body portion (22).

3. The mounting device (18) of claim 1 or 2, further comprising a limitation mechanism (28) limiting a relative movement between the first connection interface (24) and the second connection interface (26).

4. The mounting device (18) of claim 3, wherein the limitation mechanism (28) comprises a protrusion (44) movably received in an opening (46), wherein one out of the protrusion (44) and the opening (46) is associated with the first connection interface (24) and the respective other one of the protrusion (44) and the opening (46) is associated with the second connection interface (26).

5. The mounting device (18) of any one of the preceding claims, wherein the first connection interface (24) comprises a mounting pin (36) configured for being received in an opening of the vehicle structure (12).

6. The mounting device (18) of any one of the preceding claims, wherein the second connection interface (26) comprises a through hole (42) for receiving a cable tie (20).

7. The mounting device (18) of any one of the preceding claims, wherein the mounting device (18) is formed as an integral part and/or wherein the mounting device (18) is made of a single material.

8. The mounting device (18) of any one of the preceding claims, wherein the body portion (22) has a rectangular cross section.

9. The mounting device (18) of any one of the preceding claims, wherein the first connection interface (24) is arranged adjacent to the second connection interface (26).

10. The mounting device (18) of any one of the preceding claims, wherein a first distance (A) is measured between a crest (40) of the bend (30) and the first connection interface (24) and a second distance (B) is measured between the crest (40) of the bend (30) and the second connection interface (26), wherein the first distance (A) and the second distance (B) differ by 20% or less.

11. The mounting device (18) of any one of the preceding claims, wherein a distance (C) between the first connection interface (24) and the second connection interface (26) is smaller than a distance (A, B) between any one of the first connection interface (24) and the second connection interface (26) with respect to a crest (40) of the bend (30).

12. A mounting assembly (16) for attaching a pipe (14) or hose to a vehicle structure (12), the mounting assembly (16) comprising:
- a mounting device (18) according to any one of the preceding claims, and
- a cable tie (20), wherein the cable tie (20) engages the second connection interface (26) of the mounting device (18).

13. A vehicle (10) comprising a mounting device (18) according to any one of claims 1 to 11.
